# EUROPÄISCHE PATENTANMELDUNG

(11) **EP 2 293 089 A1**
(43) Veröffentlichungstag der Anmeldung: **09.03.2011**
(21) Anmeldenummer: 09169281.4
(22) Anmeldetag: 02.09.2009
(51) Int. Cl.: G01R 31/26

(54) **Stringausfallüberwachung**

(71) Anmelder: SMA Solar Technology AG, 34266 Niestetal (DE)
(72) Erfinder: Bettenwort, Dr.-Ing. Gerd, 34119, Kassel (DE); Klein, Dr. rer. nat. Jens, 37075, Göttingen (DE); Schäfer, Marc, 34233, Fuldatal (DE); Fischer, Jochen, 34255, Baunatal (DE); Frees, Wolfgang, 34131, Kassel (DE); Victor, Dr.-Ing. Matthias, 34266, Niestetal (DE)
(74) Vertreter: Rehberg Hüppe + Partner

(57) **Zusammenfassung**

Zur Überwachung einer Mehrzahl von Strings (1) einer an einen Wechselrichter (3) angeschlossene Photovoltaikanlage (4) werden die zu Messzeitpunkten oder während Messzeiträumen von den einzelnen Strings (1) zu dem Wechselrichter (3) fließenden Ströme gemessen und wird aus den zu einem Messzeitpunkt oder während eines Messzeitraums von den einzelnen Strings (1) geflossenen Strömen jeweils ein Referenzstrom bestimmt. Die von den einzelnen Strings (1) geflossenen Ströme werden auf den für den Messzeitpunkt oder Messzeitraum bestimmten Referenzstrom normiert. Zur Analyse der langfristigen Verläufe der binnen der repräsentativen Zeiträume von den einzelnen Strings (1) geflossenen normierten Ströme werden für die einzelnen Strings (1) angelegte Vergleichswerte unter Verwendung der binnen der repräsentativen Zeiträume von den einzelnen Strings geflossenen normierten Ströme fortgeschrieben, werden Differenzen zwischen den fortgeschriebenen Vergleichswerten und diesen entsprechenden Werten der binnen des letzten repräsentativen Zeitraums von den einzelnen Strings (1) geflossenen normierten Strömen gebildet und wird fortlaufend für jeden String eine Summe der gebildeten Differenzen mit einem Grenzwert für den String (1) verglichen.

## Beschreibung

### TECHNISCHES GEBIET DER ERFINDUNG

Die Erfindung bezieht sich auf ein Verfahren zur Überwachung einer Mehrzahl von Strings einer an einen Wechselrichter angeschlossenen Photovoltaikanlage, wobei die zu Messzeitpunkten oder während Messzeiträumen von den einzelnen Strings zu dem Wechselrichter fließenden Ströme gemessen werden und wobei das Verfahren die weiteren Schritte des Oberbegriffs des unabhängigen Patentanspruchs 1 aufweist.

Weiterhin bezieht sich die Erfindung auf ein Verfahren zur Überwachung einer Mehrzahl von Strings einer an einen Wechselrichter angeschlossenen Photovoltaikanlage, wobei die zu Messzeitpunkten oder während Messzeiträumen von den einzelnen Strings zu dem Wechselrichter geflossenen Leistungen bestimmt werden und wobei das Verfahren die weiteren Schritte des Oberbegriffs des unabhängigen Patentanspruchs 2 aufweist.

Der Begriff String weist von seinem englischen Wortstamm her auf eine Reihenschaltung hin, in der mehrere Solarmodule einer Photovoltaikanlage angeordnet sind. Entsprechend kann bei dem neuen Verfahren jeder String eine solche Reihenschaltung mehrerer Solarmodule sein. Üblicherweise wird jedoch nicht jede Reihe von Solarmodulen einer Photovoltaikanlage derart getrennt an einen Wechselrichter angeschlossen, dass der von jeder Reihe von Solarmodulen fließende Strom getrennt erfasst werden kann, sondern mehrere derartige Reihen von Solarmodulen werden zusammengefasst und über ein Paar von Busleitungen mit dem Wechselrichter verbunden. Nur der über diese Busleitungen fließende und von mehreren parallel geschalteten Reihen von Solarmodulen generierte Strom wird separat erfasst. Entsprechend bezeichnet der Begriff "String" in dieser Beschreibung insbesondere eine Parallelschaltung von mehreren Reihenschaltungen von Solarmodulen, die als Einheit über ein Paar von Busleitungen an einen Wechselrichter angeschlossen werden.

Wenn in einem String, dessen Stromfluss zu dem Wechselrichter getrennt überwacht wird, mehrere Reihen von Solarmodulen parallel geschaltet sind, wobei jede dieser Reihen auch als Substring des Strings bezeichnet werden kann, macht sich der Ausfall eines Substrings bei dem von dem String generierten Strom nur als partieller Einbruch bemerkbar, dessen Größe von der Anzahl der parallel geschalteten Substrings abhängt. Die vorliegende Erfindung befasst sich insbesondere mit Verfahren, die ausreichend empfindlich sind, um Strings auf einen Ausfall eines Substrings zu überwachen, die eine Vielzahl von Substrings, beispielsweise 40 Substrings oder mehr umfassen.

### STAND DER TECHNIK

Aus der EP 0 677 749 A2 ist ein Verfahren zur Überwachung einer Mehrzahl von Strings einer an einen Wechselrichter angeschlossenen Photovoltaikanlage mit den Merkmalen des Oberbegriffs des unabhängigen Patentanspruchs 1 bekannt. Dabei umfassen die einzelnen Strings insbesondere in Reihe geschaltete Solarmodule; aber auch eine zusätzliche Parallelschaltung der Solarmodule wird angesprochen. Die von den einzelnen Strings über einen Zeitraum von 10:00 bis 14:00 Uhr fließenden Ströme werden für jeden String gemittelt. Der höchste Strommittelwert wird als Referenzstrom festgelegt. Als Alternative wird angesprochen, einen Mittelwert der gemittelten Ströme über alle Strings als Referenzstrom zu verwenden. Dann werden die für die einzelnen Strings bestimmten Mittelwerte auf den Referenzstrom normiert. Ein kurzfristiger Stringausfall soll dabei dadurch erkannt werden, dass der auf den Referenzstrom normierte Strommittelwert eines Strings nur z. B. 0,8, d. h. 80 %, oder weniger beträgt. Ein langfristiger Ausfall eines Strings soll dadurch erkannt werden, dass für jeden String ein anfänglicher auf den Referenzstrom normierter Strommittelwert abgespeichert wird und die dann jeden Tag neu anfallenden auf den Referenzstrom des jeweiligen Tags normierten Strommittelwerte mit diesem Vergleichswert verglichen werden. Wenn sich dabei ein Einbruch in der Größenordnung von 3-5 % zeigt, wird dies als Hinweis auf einen sich anbahnenden Ausfall des jeweiligen Strings interpretiert.

Das bekannte Verfahren zur Überwachung einer Mehrzahl von Strings erweist sich als nicht ausreichend sensibel, um den Ausfall nur eines einer Vielzahl von Substrings eines Strings zu erkennen. So sind bei aktuellen Photovoltaikanlagen z. B. 40 Substrings zu einem String zusammengefasst, der über ein Paar von Busleitungen an einen Wechselrichter angeschlossen ist. Der Ausfall eines Substrings eines solchen Strings bedeutet eine Reduzierung des gelieferten Stroms um nur 2,5 %. Damit würde mit dem bekannten Verfahren nicht einmal ein Totalausfall eines Substrings eines solchen Strings erkannt.

### AUFGABE DER ERFINDUNG

Der Erfindung liegt die Aufgabe zugrunde, ein Verfahren zur Überwachung einer Mehrzahl von Strings einer an einen Wechselrichter angeschlossenen Photovoltaikanlage aufzuzeigen, das eine ausreichend hohe Empfindlichkeit aufweist, um auch beim Ausfall nur eines von sehr vielen parallel geschalteten Substrings eines Strings anzusprechen, aber dennoch nicht dazu neigt, fälschlicherweise von einem (Sub-)Stringausfall auszugehen.

### LÖSUNG

Erfindungsgemäß wird diese Aufgabe durch ein Verfahren mit den Merkmalen des unabhängigen Patentanspruchs 1 und durch ein Verfahren mit den Merkmalen des unabhängigen Patentanspruchs 2 gelöst. Bevorzugte Ausführungsformen der neuen Verfahren sind in den abhängigen Patentansprüchen definiert.

### BESCHREIBUNG DER ERFINDUNG

Die neuen Verfahren nach den unabhängigen Ansprüchen 1 und 2 unterscheiden sich nur dadurch, dass in dem einen Fall die zu den Messzeitpunkten oder während der Messzeiträume geflossenen Ströme ausgewertet werden, während in dem anderen Fall die zu den Messzeitpunkten oder während der Messzeiträume geflossenen Leistungen betrachtet werden. Da die geflossenen Leistungen in aller Regel als Produkte der Messwerte der zu den Messzeitpunkten oder während der Messzeiträume geflossenen Ströme und der zugehörigen Spannungen bestimmt werden, erübrigt sich eine separate detaillierte Beschreibung dieses zweiten Falls. Vielmehr trifft jede der folgenden Erläuterungen des Verfahrens nach dem unabhängigen Anspruch 1 unter Berücksichtigung der Umrechnung der dabei betrachteten Ströme durch Multiplikation mit den zugehörigen Spannungen in die entsprechenden Leistungen auch auf das Verfahren nach dem unabhängigen Anspruch 2 zu. Erfindungsgemäß werden zur Überwachung einer Mehrzahl von Strings einer an einen Wechselrichter angeschlossenen Photovoltaikanlage die von den einzelnen Strings zu dem Wechselrichter fließenden Ströme gemessen. Vorzugsweise wird dabei jeweils für einen vorgegebenen Messzeitraum von wenigen Sekunden bis wenigen Minuten, der für alle Strings derselbe ist, ein Messwert für jeden String als Mittelwert des Stroms über diesen Messzeitraum bestimmt. Anschließend wird der nächste Satz von Messwerten auf dieselbe Weise für einen folgenden gleich langen Messzeitraum bestimmt. Auf diese Weise werden über den gesamten Tag oder einen anderen repräsentativen Zeitraum Messwerte aufgenommen. Danach oder bereits parallel dazu wird für jeden Messzeitraum aus den Messwerten der von den einzelnen Strings geflossenen Strömen ein Referenzstrom bestimmt. Hierbei kann es sich, wie aus dem Stand der Technik bekannt ist, um den Maximalwert oder einen Mittelwert der Messwerte handeln. Bevorzugt ist es jedoch, den Median der Messwerte als Referenzwert zu verwenden. Dieser Referenzwert wird verwendet, um die Messwerte der vorzugsweise in demselben Messzeitraum von den einzelnen Strings geflossenen Ströme zu normieren, um bei deren weiterer Beurteilung Einflüsse auszuschalten, die alle Strings gleichermaßen betreffen, wie beispielsweise unterschiedliche Einstrahlungen. Bei kürzeren Messzeiträumen ist es auch möglich, statt des für denselben Messzeitraum bestimmten Referenzstroms einen für einen früheren Messzeitraum bestimmten Referenzstrom für die Normierung zu verwenden.

Zur Analyse der langfristigen Verläufe der binnen repräsentativer Zeiträume von den einzelnen Strings geflossenen normierten Ströme, um einen Ausfall eines Strings, auch wenn hiervon nur einer von vielen Substrings des Strings betroffen ist, zu erkennen, werden bei dem erfindungsgemäßen Verfahren zunächst Vergleichswerte etabliert. Die Vergleichswerte werden basierend auf mindestens einem der repräsentativen Zeiträume angelegt, wobei es aber bevorzugt ist, mehrere repräsentative Zeiträume zu berücksichtigen, um Einzelereignisse und statistische Schwankungen zu kompensieren. Dazu werden die in den mehreren repräsentativen Zeiträumen geflossenen normierten Ströme betrachtet, und hieraus wird ein Vergleichswert festgelegt, der ein relativer Strom ist, wie er typischerweise von dem betrachteten String im Vergleich zu den Strömen von anderen Strings fließt. Zunächst wird für jeden repräsentativen Zeitraum, wie beispielsweise einen Tag, einen ausgewählten Teil eines Tags oder eine Mehrzahl von Tagen, ein repräsentativer Strom aus den zuvor für diesen repräsentativen Zeitraum bestimmten normierten Strömen festgelegt. Hierbei kann es sich um einen Mittelwert der Einzelwerte der normierten Ströme handeln, die für den repräsentativen Zeitraum bestimmt wurden. Darüber hinaus kann der repräsentative Strom auch durch Anfitten einer Funktion an die über den repräsentativen Zeitraum hinweg geflossenen normierten Ströme und Bestimmung beispielsweise des Mittelwerts oder Maximalwerts dieser Funktion während des repräsentativen Zeitraums festgelegt werden. Wieder ist es aber günstig und bevorzugt, den Median dieser normierten Ströme als repräsentativen Wert zu verwenden. Jedweder Einfluss auf die normierten Ströme von den einzelnen Strings, der nur einen Teilzeitraum des repräsentativen Zeitraums erfasst, welcher nicht größer als der halbe repräsentative Zeitraum wird, bleibt bei dem neuen Verfahren, wenn als repräsentativer Wert für den repräsentativen Zeitraum der Median der normierten Ströme verwendet wird, nahezu ohne Auswirkung. Umgekehrt macht sich ein Einbruch des Stroms infolge eines Ausfalls eines Substrings, soweit sich dieser Einbruch über mehr als die Hälfte des repräsentativen Zeitraums auswirkt, bei dem Median besonders deutlich bemerkbar, d. h. deutlicher als bei einem Mittelwert über den repräsentativen Zeitraum. Auch beim Betrachten dieser repräsentativen Ströme für mehrere repräsentative Zeiträume zum Anlegen der Vergleichswerte für jeden einzelnen String kann eine Mittelwertbildung über die repräsentativen Ströme oder vorzugsweise die Bestimmung des Medians erfolgen.

Bei dem neuen Verfahren sind die für die einzelnen Strings angelegten Vergleichswerte nicht konstant, sondern sie werden unter Berücksichtigung der binnen der weiteren repräsentativen Zeiträume von den einzelnen Strings geflossenen normierten Ströme fortgeschrieben. Langfristige Veränderungen der relativen Ströme von den einzelnen Strings führen so zu einer Veränderung der für sie angelegten Vergleichswerte. Damit können zwar langsame, aber dennoch verfrühte Degradationen einzelner Strings mit dem erfindungsgemäßen Verfahren nicht erkannt werden. Dies kann aber durch einen zusätzlichen Vergleich der aktuellen normierten Ströme mit den ursprünglich angelegten Vergleichswerten ausgeglichen werden. Umgekehrt sorgt die Fortschreibung der Vergleichswerte für die einzelnen Strings für eine erhöhte Sensibilität des neuen Verfahrens gegenüber kurzfristigen Ausfällen von Substrings eines Strings, auch wenn in diesem String einige 10 Substrings, wie beispielsweise 40 oder mehr Substrings, parallel geschaltet sind.

Zusätzlich wird bei dem neuen Verfahren nicht nur einmal geschaut, ob ein repräsentativer normierter Strom um ein bestimmtes Maß von dem zugehörigen fortgeschriebenen Vergleichswert abweicht und bereits dann auf einen Fehler erkannt. Vielmehr werden die Differenzen zwischen den fortgeschriebenen Vergleichswerten und den entsprechenden Werten der binnen des jeweils letzten repräsentativen Zeitraums von den einzelnen Strings geflossenen normierten Strömen gebildet und aufsummiert. Erst diese Summe wird dann mit einem Grenzwert verglichen, der für jeden String individuell festgelegt sein kann, und beim Überschreiten dieses Grenzwerts durch die Summe der Differenzen wird auf einen Ausfall des jeweiligen Strings erkannt. Dabei ist festzuhalten, dass die Summanden dieser Summe nicht nur positiv sein können, wenn der Wert für den letzten repräsentativen Zeitraum hinter dem aktuellen fortgeschriebenen Vergleichswert zurückbleibt, sondern auch negativ, wenn der letzte repräsentative Wert den aktuellen fortgeschriebenen Vergleichswert überschreitet. Die Summe der Differenzen steigt also nicht nur an, sondern kann auch (wieder) abfallen. Überdies handelt es sich bei dieser Summe vorzugsweise nicht um eine direkte Summe der Differenzen, sondern diese Differenzen werden vor der Addition zu der jeweils vorherigen Summe gewichtet und von der Summe werden zusätzliche regelmäßige Abzüge gemacht, um statistische Effekte zu kompensieren, wie im Folgenden noch näher erläutert werden wird.

Um einen direkten Vergleich der Summen der Differenzen der einzelnen Strings untereinander und mit einem für alle Strings geltenden Grenzwert zu ermöglichen, können die Differenzen vor dem Bilden ihrer Summe jeweils auf den zugehörigen fortgeschriebenen Vergleichswert normiert werden.

Wie bereits angedeutet wurde, wird bei dem neuen Verfahren vorzugsweise von der fortlaufend für jeden String gebildeten Summe je Summand ein Abzug gemacht, um statistische Schwankungen bei den gemessenen Strömen zu berücksichtigen. Entsprechend kann sich dieser Abzug an der Standardabweichung der Messwerte der normierten Ströme orientieren. Der Abzug kann aber auch in Form eines festen vorgegebenen Werts vorgenommen werden.

Es wurde ebenfalls bereits angedeutet, dass die fortlaufend für jeden String berechnete Summe keine direkte Summe der gebildeten Differenzen ist, sondern Gewichtungsfaktoren Berücksichtigung finden. Konkret kann ein Gewichtungsfaktor der jeweils aktuellen Differenz mit der jeweils vorher bestimmten Summe ansteigen, wenn die aktuelle Differenz positiv ist, also auch auf einem von dem jeweiligen String geflossenen Strom unterhalb des fortgeschriebenen Vergleichswerts beruht. Hierdurch steigt die Summe mit derartigen positiven Differenzen schnell weiter an, wenn sie bereits vorher einen gewissen Wert erreicht hatte.

Weiter können Gewichtungsfaktoren für derartige positive Differenzen mit der Häufigkeit großer positiver Differenzen ansteigen. Wenn - mit anderen Worten - in der jüngeren Vergangenheit schon wiederholt große positive Differenzen aufgetreten sind, was ein Hinweis auf einen Stringausfall ist, werden die darüber hinaus anfallenden positiven Differenzen stärker gewichtet, als wenn solche Ereignisse in jüngerer Vergangenheit nicht aufgetreten sind.

Wenn es jedoch Anzeichen dafür gibt, dass ein einzelner String doch nicht ausfallbedroht oder gar bereits von einem Ausfall betroffen ist, kann der die mit der Häufigkeit großer positiver Differenzen angestiegene Gewichtungsfaktor positiver Differenzen für diesen String für die Zukunft wieder reduziert werden. Als auslösendes Kriterium für das Reduzieren des Gewichtungsfaktors kann das Auftreten einer negativen Differenz verwendet werden.

Auch der Vergleichswert für jeden String wird vorzugsweise unter gewichteter Berücksichtigung von binnen der früheren repräsentativen Zeiträume von dem String geflossenen normierten Ströme berechnet. Vorzugsweise ist der fortgeschriebene Vergleichswert für jeden String ein gewichteter Mittelwert des letzten Vergleichswerts und eines Medians der repräsentativen Werte für eine bestimmte Anzahl der letzten repräsentativen Zeiträume, wobei der Gewichtungsfaktor dieses Medians umso kleiner ist, je deutlicher Hinweise darauf sind, dass der jeweilige String von einem Ausfall betroffen ist. Anders gesagt soll der Vergleichswert nur dann durch die Fortschreibung geändert werden, wenn keine derartigen Ausfallanzeichen vorliegen. So kann der Gewichtungsfaktor für den aktuellen repräsentativen Wert mit ansteigender zugehöriger Differenz und/oder ansteigender zugehöriger Summe und/oder ansteigender Anzahl großer positiver Differenzen reduziert werden.

Um Ausfälle von Strings zu erfassen, werden bei dem neuen Verfahren vorzugsweise ganze Tage oder äquivalente gleiche Teile von ganzen Tagen als repräsentativer Zeitraum betrachtet, wie beispielsweise immer ein gleich langer Zeitraum um den Mittagszeitpunkt.

Zusätzlich kann auch der Tagesverlauf der normierten Ströme von den einzelnen Strings analysiert werden. Hierdurch können beispielsweise tageszeitbedingte Verschattungen einzelner Strings aufgedeckt oder schlechte Belüftungen einzelner Strings bei der maximalen thermischen Belastung zur Mittagszeit erkannt werden, um den hiermit verbundenen Leistungseinbußen zu begegnen. Eine Verschattung macht sich typischerweise in einem vorübergehenden Einbruch der normierten Werte der geflossenen Ströme bemerkbar, der häufig am Abend und am Morgen auftritt. Die schlechte Belüftung eines Strings macht sich insbesondere am Mittag und bei maximaler Einstrahlung bemerkbar. Tageszeitbedingte Verschattungen oder schlechte Belüftungen einzelner Strings können neben der Analyse normierter Ströme oder Leistungen auch durch Auswertung entsprechender normierter Spannungen aufgedeckt werden.

Das neue Verfahren basiert auf der Messung der Ströme, die von ganzen Strings während des Betriebs einer Photovoltaikanlage fließen. Dennoch ist das neue Verfahren empfindlich genug, um den Ausfall auch nur eines Substrings einer Vielzahl von Substrings eines Strings anhand dieser gemessenen Ströme zu erkennen. Es entfällt damit die Notwendigkeit des Anbringens von Sensorik zur Überwachung der einzelnen Substrings am Ort der Strings. Vielmehr kann das erfindungsgemäße Verfahren am Ort des Wechselrichters, der die elektrische Leistung von der Photovoltaikanlage in ein Wechselstromnetz einspeist, durchgeführt werden. Insbesondere kann es bei vorhandenen Einrichtungen zum Messen der Ströme von den einzelnen Strings und ausreichender Speicherkapazitäten für die auszuwertenden Messwerte in Form einer Software für die Steuerung des Wechselrichters umgesetzt werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines Ausführungsbeispiels unter Bezugnahme auf die beigefügten Zeichnungen näher erläutert und beschrieben.
- **Fig. 1**: skizziert den Anschluss mehrerer aus jeweils mehreren Substrings zusammen- gesetzten Strings einer Photovoltaikanlage an einen elektrische Energie von der Photovoltaikanlage in ein Wechselstromnetz einspeisenden Wechselrichter.
- **Fig. 2**: ist ein Ablaufdiagramm des neuen Verfahrens.
- **Fig. 3**: zeigt den Verlauf der während eines Tags von sechs Strings geflossenen Ströme.
- **Fig. 4**: zeigt den Verlauf der Ströme gemäß Fig. 3 nach Normierung.
- **Fig. 5**: zeigt den Verlauf der während eines Tags geflossenen Ströme bei Ausfall eines Substrings.
- **Fig. 6**: zeigt den Verlauf der Fig. 5 entsprechenden normierten Ströme.

### FIGURENBESCHREIBUNG

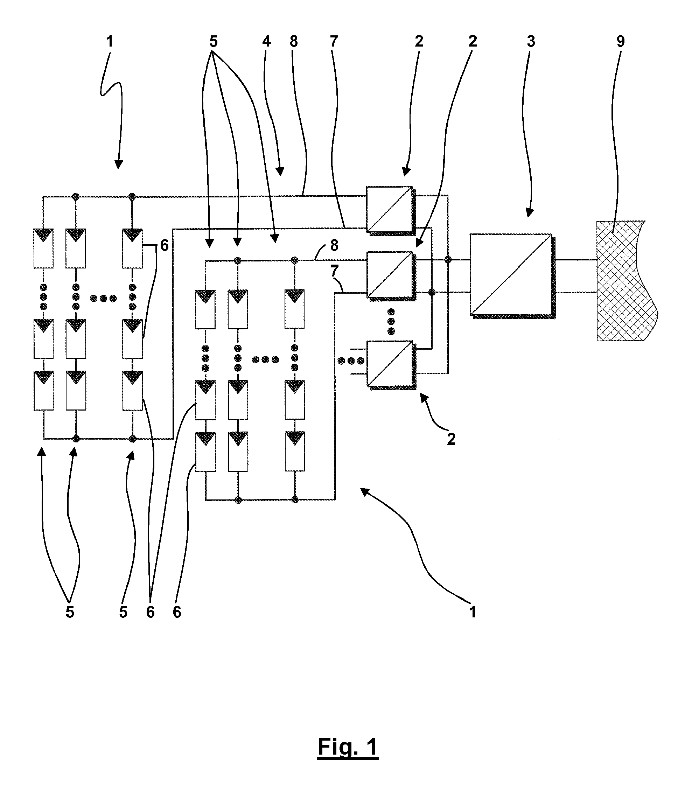

**Fig. 1** skizziert den Anschluss mehrerer Strings 1 über jeweils eine Anschlusseinrichtung 2 an einen Wechselrichter 3 zur Einspeisung elektrischer Energie von den durch die Strings 1 gebildeten Photovoltaikanlage 4 in ein Wechselstromnetz 9. Jeder String 1 besteht aus einer Vielzahl von zueinander parallel geschalteten Substrings 5. Jeder Substring 5 wiederum umfasst eine Vielzahl von in Reihe geschalteten Solarmodulen 6. Weder die Anzahl der Substrings 5 noch der Solarmodule 6 ist hier für die Strings 1 vollständig wiedergegeben. Dasselbe gilt für die Anzahl der Strings 1. Die Anschlusseinrichtungen 2 umfassen zumindest jeweils Messeinrichtungen zum Messen der Ströme von den einzelnen Strings 1 zu dem Wechselrichter 3. Im Betrieb der Photovoltaikanlage 4, d. h. beim Einspeisen elektrischer Energie in das Wechselstromnetz 9 über den Wechselrichter 3, ist die Ausgangsspannung aller Strings 1 zwischen ihren jeweiligen Busleitungen 7 und 8, an die alle Substrings angeschlossen sind, gleich. Die Beteiligung der einzelnen Strings 1 an der elektrischen Energie, die in das Wechselstromnetz 9 eingespeist wird, bildet sich daher vollständig in den von den jeweiligen Strings 1 fließenden Strömen ab, die mit den Anschlusseinrichtungen 2 erfasst werden.

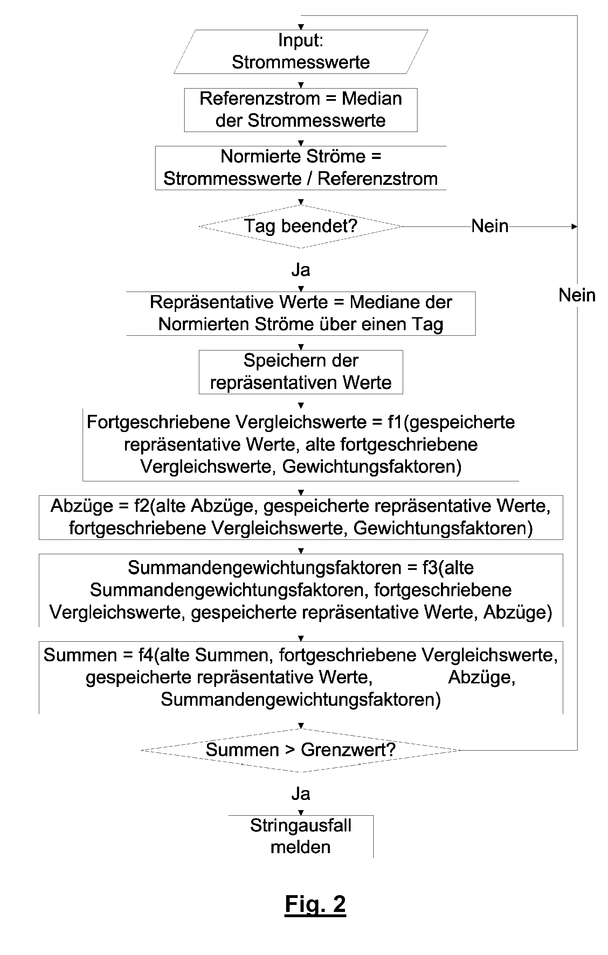

**Fig. 2** skizziert den Ablauf des erfindungsgemäßen Verfahrens zur Überwachung der Strings 1 gemäß Fig. 1, wobei auch der Ausfall nur eines von beispielsweise 40 parallel geschalteten Substrings 5 erkannt werden soll. Hierzu wird von Strommesswerten der Anschlusseinrichtung 2 gemäß Fig. 1 ausgegangen, die die Mittelwerte der jeweils binnen eines Zeitraums von 10 Sekunden gemessenen Ströme sind. Für jeden dieser Messzeiträume von 10 Sekunden wird aus diesen Strommesswerten ein Referenzstrom bestimmt. Gemäß Fig. 2 wird hierfür der Median der Strommesswerte von allen Strings verwendet. Unter Verwendung dieses Referenzstroms werden aus den Strommesswerten normierte Ströme berechnet, indem die Strommesswerte durch den Referenzstrom dividiert werden. Dies wird für alle Messzeiträume von 10 Sekunden während des gesamten Tags durchgeführt.

Am Ende jedes Tags wird für jeden String ein repräsentativer Wert für den Tag ermittelt. Hier ist dies der Median der normierten Ströme. Diese repräsentativen Werte werden für alle Strings gespeichert. Aus den für mehrere Tage gespeicherten repräsentativen Werten für jeweils einen String wird für diesen String ein Vergleichswert angelegt, vorzugsweise ebenfalls in Form des Medians der repräsentativen Werte über diese Tage. Erst wenn auf diese Weise Vergleichswerte für alle Strings angelegt wurden, laufen die weiteren Verfahrensschritte gemäß Fig. 2 am Ende jedes Tags ab. Die Vergleichswerte für die Strings werden jeweils als Funktion f1 des alten fortgeschriebenen Vergleichswerts und eines Medians der für eine Anzahl der letzten Tage gespeicherten repräsentativen Werte und von Gewichtungsfaktoren fortgeschrieben, wobei der Gewichtungsfaktor für den Median umso niedriger ausfällt, desto größer die bereits vorhandenen Hinweise darauf sind, dass dieser String von einem Ausfall betroffen ist. Dann wird unter Verwendung der fortgeschriebenen oder noch der alten fortgeschriebenen Vergleichswerte eine Summe der Differenzen zwischen diesen fortgeschriebenen Vergleichswerten und den gespeicherten repräsentativen Werten des letzten Tags für jeden String berechnet. Dabei wird die aktuelle Differenz nicht als direkter Summand, sondern mit einem Summandengewichtungsfaktor hinzuaddiert. Zusätzlich wird von jedem Summanden ein konstanter oder von Standardabweichungen der normierten Ströme abhängiger Abzug gemacht. Es versteht sich, dass die resultierenden Summanden bei negativen Differenzen, d. h. repräsentativen Werten eines Strings oberhalb seines fortgeschriebenen Vergleichswerts, ebenfalls negativ sind.

Die Summandengewichtungsfaktoren sind jeweils eine Funktion f3 der alten Summandengewichtungsfaktoren, der fortgeschriebenen Vergleichswerte, der gespeicherten repräsentativen Werte des letzten Tags und von Abzügen. Diese Abzüge sind ebenfalls fortgeschriebene Werte, die eine Funktion f2 der alten Abzüge sind und von den gespeicherten repräsentativen Werten, den fortgeschriebenen Vergleichswerten sowie Gewichtungsfaktoren beeinflusst werden.

Entscheidend für die Feststellung, ob ein String ausgefallen ist, ist der Vergleich der aktuellen Summe für den jeweiligen String mit einem Grenzwert. Ein Überschreiten des Grenzwerts weist auf einen Stringausfall hin, der entsprechend gemeldet wird. Durch die Beobachtung der erfindungsgemäß für jeden String gebildeten Summe statt nur des jeweils aktuellen repräsentativen Werts im Vergleich zu einem starren Vergleichswert ist das neue Verfahren robust gegenüber statistischen Schwankungen und anderen unspezifischen Einflüssen auf die ausgewerteten Messwerte. Die Empfindlichkeit des neuen Verfahrens kann daher sehr hoch eingestellt werden, ohne dass es zur Falschanzeige von Stringausfällen kommt. Konkret kann selbst der schleichende Ausfall eines Substrings 5 gemäß Fig. 1 über einen Zeitraum einiger Tage selektiv erkannt werden, auch wenn dieser Ausfall einen anteiligen Einbruch des Stroms von dem gesamten String 1 über diesen Zeitraum von nur beispielsweise 2,5 % oder weniger bedeutet.

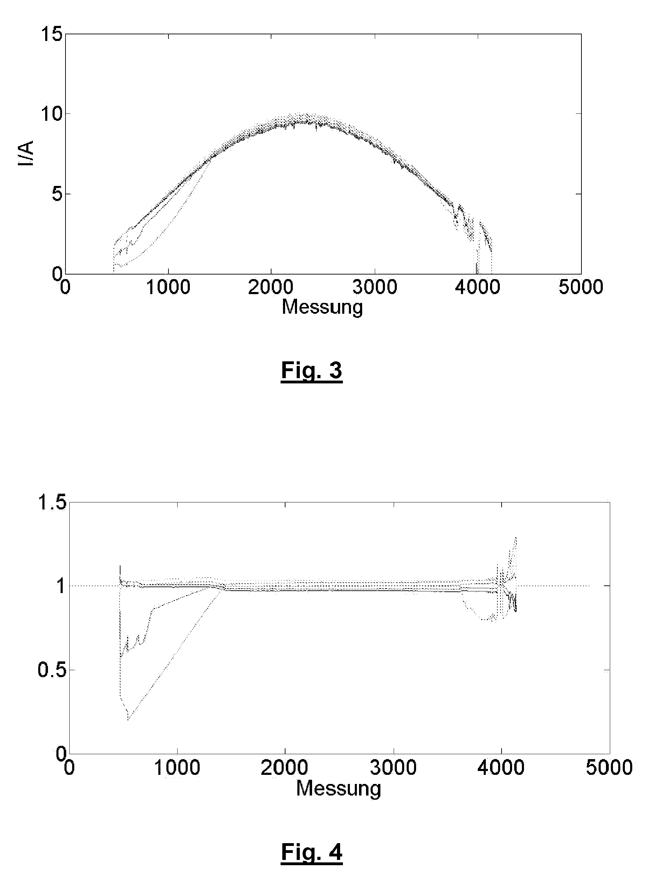

**Fig. 3** zeigt die Strommesswerte für sechs Strings über einen Tag, bei dem etwa 4.000 Messungen, d. h. etwa 4.000 Mittelwerte über einen Zeitraum von jeweils 10 Sekunden bestimmt werden. Aus Fig. 3 ist erkennbar, dass am Morgen der Strom von zwei Strings unterdurchschnittlich hoch ist, weil diese zu dieser Zeit teilverschattet sind. Ein ähnlicher Effekt tritt bei einem String am Abend auf.

**Fig. 4** gibt die auf den Median der Strommesswerte während jedes Messzeitraums von 10 Sekunden normierten Ströme für denselben Tag wie in Fig. 3 wieder. Außer am Morgen, wo die Verschattungen der beiden Strings noch deutlicher sind als in Fig. 3, und am Abend, wo auch die zu dieser Zeit erfolgende Verschattung eines Strings gut zu erkennen ist, weisen die relativen Ströme von den einzelnen Strings weitgehend konstante Werte auf. Wenn der Median der normierten Ströme gemäß Fig. 4 für jeden String bestimmt wird, ergibt sich hieraus ein von allen Teilverschattungen und anderen während eines Tags vorübergehenden Effekten unabhängiger repräsentativer Wert.

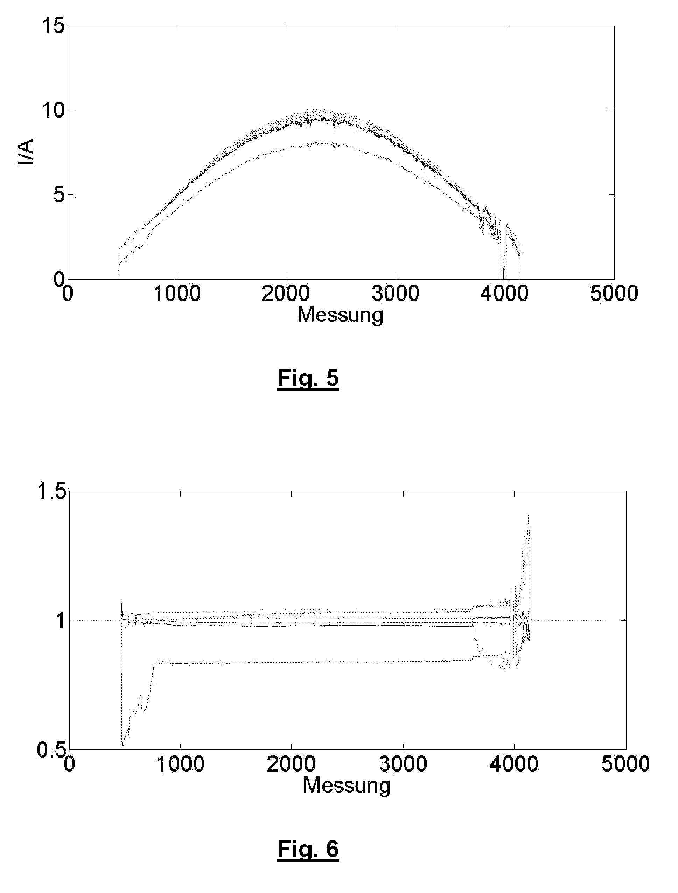

**Fig. 5** zeigt in einer Fig. 3 entsprechenden Darstellung die Strommesswerte von sechs Strings, von denen einer aufgrund des Ausfalls eines Substrings nur einen reduzierten Strom liefert.

Die Darstellung der entsprechenden normierten Ströme gemäß **Fig. 6** zeigt für diesen Substring einen deutlich nach unten abgesetzten Wert, der sehr schnell zu einer hohen Summe und damit einer Überschreitung des Grenzwerts bei dem in Fig. 2 skizzierten Verfahren führt.

### BEZUGSZEICHENLISTE

- 1: String
- 2: Anschlusseinrichtung
- 3: Wechselrichter
- 4: Photovoltaikanlage
- 5: Substring
- 6: Solarmodul
- 7: Busleitung
- 8: Busleitung
- 9: Wechselstromnetz

## Patentansprüche

1. Verfahren zur Überwachung einer Mehrzahl von Strings (1) einer an einen Wechselrichter (3) angeschlossenen Photovoltaikanlage (4), wobei die zu Messzeitpunkten oder während Messzeiträumen von den einzelnen Strings (1) zu dem Wechselrichter (3) fließenden Ströme gemessen werden, wobei aus den zu einem Messzeitpunkt oder während eines Messzeitraums von den einzelnen Strings (1) geflossenen Strömen jeweils ein Referenzstrom bestimmt wird, wobei die von den einzelnen Strings (1) geflossenen Ströme auf den für den Messzeitpunkt oder Messzeitraum bestimmten Referenzstrom normiert werden, wobei langfristige Verläufe der binnen repräsentativer Zeiträume von den einzelnen Strings (1) geflossenen normierten Ströme durch Vergleich mit für die einzelnen Strings (1) angelegten Vergleichswerten analysiert werden, **dadurch gekennzeichnet, dass** zur Analyse der langfristigen Verläufe der binnen der repräsentativen Zeiträume von den einzelnen Strings (1) geflossenen normierten Ströme:
- die für die einzelnen Strings (1) angelegten Vergleichswerte unter Verwendung der binnen der repräsentativen Zeiträume von den einzelnen Strings (1) geflossenen normierten Ströme fortgeschrieben werden;
- Differenzen zwischen den fortgeschriebenen Vergleichswerten und diesen entsprechenden Werten der binnen des letzten repräsentativen Zeitraums von den einzelnen Strings (1) geflossenen normierten Strömen gebildet werden; und
- fortlaufend für jeden String (1) eine Summe der gebildeten Differenzen mit einem Grenzwert für den String (1) verglichen wird.

2. Verfahren zur Überwachung einer Mehrzahl von Strings (1) einer an einen Wechselrichter (3) angeschlossenen Photovoltaikanlage (4), wobei die von den einzelnen Strings (1) zu Messzeitpunkten oder während Messzeiträumen zu dem Wechselrichter (3) geflossenen Leistungen bestimmt werden, wobei aus den zu einem Messzeitpunkt oder während eines Messzeitraums von den einzelnen Strings (1) geflossenen Leistungen jeweils eine Referenzleistung bestimmt wird, wobei die von den einzelnen Strings (1) geflossenen Leistungen auf die für den Messzeitpunkt oder Messzeitraum bestimmte Referenzleistung normiert werden, wobei langfristige Verläufe der binnen repräsentativer Zeiträume von den einzelnen Strings (1) geflossenen normierten Leistungen durch Vergleich mit für die einzelnen Strings (1) angelegten Vergleichswerten analysiert werden, **dadurch gekennzeichnet, dass** zur Analyse der langfristigen Verläufe der binnen der repräsentativen Zeiträume von den einzelnen Strings (1) geflossenen normierten Leistungen:
- die für die einzelnen Strings (1) angelegten Vergleichswerte unter Verwendung der binnen der repräsentativen Zeiträume von den einzelnen Strings (1) geflossenen normierten Leistungen fortgeschrieben werden;
- Differenzen zwischen den fortgeschriebenen Vergleichswerten und diesen entsprechenden Werten der binnen des letzten repräsentativen Zeitraums von den einzelnen Strings (1) geflossenen normierten Leistungen gebildet werden; und
- fortlaufend für jeden String (1) eine Summe der gebildeten Differenzen mit einem Grenzwert für den String (1) verglichen wird.

3. Verfahren nach Anspruch 1 oder 2, **dadurch gekennzeichnet, dass** die Differenzen vor dem Berechnen ihrer Summe jeweils auf den zugehörigen fortgeschriebenen Vergleichswert normiert werden.

4. Verfahren nach mindestens einem der vorhergehenden Ansprüche, **dadurch gekennzeichnet, dass** von der fortlaufend für jeden String berechneten Summe je Summand ein Abzug gemacht wird, um statistische Schwankungen bei den Messwerten zu berücksichtigen.

5. Verfahren nach mindestens einem der vorhergehenden Ansprüche, **dadurch gekennzeichnet, dass** die fortlaufend für jeden String berechnete Summe eine gewichtete Summe der gebildeten Differenzen ist.

6. Verfahren nach Anspruch 5, **dadurch gekennzeichnet, dass** die Gewichtungsfaktoren positiver Differenzen mit der jeweils vorher bestimmten Summe ansteigen.

7. Verfahren nach Anspruch 5, **dadurch gekennzeichnet, dass** die Gewichtungsfaktoren positiver Differenzen mit der Häufigkeit großer positiver Differenzen ansteigen.

8. Verfahren nach Anspruch 7, **dadurch gekennzeichnet, dass** die mit der Häufigkeit großer positiver Differenzen angestiegenen Gewichtungsfaktoren positiver Differenzen beim Auftreten einer negativen Differenz reduziert werden.

9. Verfahren nach mindestens einem der vorhergehenden Ansprüche, **dadurch gekennzeichnet, dass** der fortgeschriebene Vergleichswert für jeden String (1) ein gewichteter Mittelwert von binnen der früheren repräsentativen Zeiträume von dem String (1) geflossenen normierten Ströme oder Leistungen ist.

10. Verfahren nach Anspruch 9, **dadurch gekennzeichnet, dass** die Gewichtungsfaktoren für die einzelnen normierten Ströme mit ansteigender zugehöriger Differenz und/oder ansteigender zugehöriger Summe und/oder ansteigender Anzahl großer positiver Differenzen binnen eines mehrere repräsentative Zeiträume umfassenden Beobachtungszeitraums reduziert werden.

11. Verfahren nach mindestens einem der vorhergehenden Ansprüche, **dadurch gekennzeichnet, dass** die repräsentativen Zeiträume ganze Tage oder gleiche Teile von ganzen Tagen oder mehrere ganze Tage sind.

12. Verfahren nach mindestens einem der vorhergehenden Ansprüche, **dadurch gekennzeichnet, dass** zusätzlich der Tagesverlauf der normierten Ströme oder der normierten Leistungen von den einzelnen Strings (1) oder von entsprechend normierten Spannungen über den einzelnen Strings (1) analysiert wird.

13. Verfahren nach mindestens einem der vorhergehenden Ansprüche, **dadurch gekennzeichnet, dass** als Referenzstrom oder Referenzleistung ein Einzelwert, insbesondere der Median, der von den einzelnen Strings binnen eines repräsentativen Zeitraums geflossenen Ströme oder Leistungen oder ein Mittelwert der von den einzelnen Strings binnen eines repräsentativen Zeitraums geflossenen Ströme oder Leistungen verwendet wird.

14. Verfahren nach mindestens einem der vorhergehenden Ansprüche, **dadurch gekennzeichnet, dass** der Vergleichswert für jeden String als Median oder Mittelwert der binnen mehrerer repräsentativer Zeiträume geflossenen normierten Ströme oder Leistungen angelegt wird.

15. Verfahren nach mindestens einem der vorhergehenden Ansprüche, **dadurch gekennzeichnet, dass** es mit allen Schritten am Ort des Wechselrichters (3) durchgeführt wird.

## Geänderte Patentansprüche

### Geänderte Patentansprüche gemäss Regel 137(2) EPÜ.

**1.** Verfahren zur Überwachung einer Mehrzahl von Strings (1) einer an einen Wechselrichter (3) angeschlossenen Photovoltaikanlage (4), wobei die zu Messzeitpunkten oder während Messzeiträumen von den einzelnen Strings (1) zu dem Wechselrichter (3) fließenden Ströme gemessen werden, wobei aus den zu einem Messzeitpunkt oder während eines Messzeitraums von den einzelnen Strings (1) geflossenen Strömen jeweils ein Referenzstrom bestimmt wird, wobei die von den einzelnen Strings (1) geflossenen Ströme auf den für den Messzeitpunkt oder Messzeitraum bestimmten Referenzstrom normiert werden, wobei langfristige Verläufe der binnen repräsentativer Zeiträume von den einzelnen Strings (1) geflossenen normierten Ströme durch Vergleich mit für die einzelnen Strings (1) angelegten Vergleichswerten analysiert werden, **dadurch gekennzeichnet, dass** zur Analyse der langfristigen Verläufe der binnen der repräsentativen Zeiträume von den einzelnen Strings (1) geflossenen normierten Ströme:
- die für die einzelnen Strings (1) angelegten Vergleichswerte unter Verwendung der binnen der repräsentativen Zeiträume von den einzelnen Strings (1) geflossenen normierten Ströme fortgeschrieben werden, so dass langfristige Veränderungen der normierten Ströme von den einzelnen Strings zu einer Veränderung der für sie angelegten Vergleichswerte führen;
- Differenzen zwischen den fortgeschriebenen Vergleichswerten und diesen entsprechenden Werten der binnen des letzten repräsentativen Zeitraums von den einzelnen Strings (1) geflossenen normierten Strömen gebildet werden; und
- fortlaufend für jeden String (1) eine Summe der gebildeten Differenzen mit einem Grenzwert für den String (1) verglichen wird, um einen Ausfall des Strings (1), auch wenn hiervon nur einer von vielen Substrings des Strings (1) betroffen ist, zu erkennen.

**2.** Verfahren zur Überwachung einer Mehrzahl von Strings (1) einer an einen Wechselrichter (3) angeschlossenen Photovoltaikanlage (4), wobei die von den einzelnen Strings (1) zu Messzeitpunkten oder während Messzeiträumen zu dem Wechselrichter (3) geflossenen Leistungen bestimmt werden, wobei aus den zu einem Messzeitpunkt oder während eines Messzeitraums von den einzelnen Strings (1) geflossenen Leistungen jeweils eine Referenzleistung bestimmt wird, wobei die von den einzelnen Strings (1) geflossenen Leistungen auf die für den Messzeitpunkt oder Messzeitraum bestimmte Referenzleistung normiert werden, wobei langfristige Verläufe der binnen repräsentativer Zeiträume von den einzelnen Strings (1) geflossenen normierten Leistungen durch Vergleich mit für die einzelnen Strings (1) angelegten Vergleichswerten analysiert werden, **dadurch gekennzeichnet, dass** zur Analyse der langfristigen Verläufe der binnen der repräsentativen Zeiträume von den einzelnen Strings (1) geflossenen normierten Leistungen:
- die für die einzelnen Strings (1) angelegten Vergleichswerte unter Verwendung der binnen der repräsentativen Zeiträume von den einzelnen Strings (1) geflossenen normierten Leistungen fortgeschrieben werden, so dass langfristige Veränderungen der normierten Ströme von den einzelnen Strings zu einer Veränderung der für sie angelegten Vergleichswerte führen;
- Differenzen zwischen den fortgeschriebenen Vergleichswerten und diesen entsprechenden Werten der binnen des letzten repräsentativen Zeitraums von den einzelnen Strings (1) geflossenen normierten Leistungen gebildet werden; und
- fortlaufend für jeden String (1) eine Summe der gebildeten Differenzen mit einem Grenzwert für den String (1) verglichen wird, um einen Ausfall des Strings (1), auch wenn hiervon nur einer von vielen Substrings des Strings (1) betroffen ist, zu erkennen.
